# FASCICULE DE BREVET EUROPEEN

(11) **EP 0 621 409 B1**
(45) Date de publication et mention de la délivrance du brevet: **12.08.1998**
(21) Numéro de dépôt: 94420121.9
(22) Date de dépôt: 15.04.1994
(51) Int. Cl.: F16B 5/06, F16B 5/07, F16B 17/00

(54) **Dispositif de fixation amovible entre un organe de support et d'actionnement et un outil**
Befestigungseinrichtung zwischen einem Stütz- und Bewegungsteil sowie einem Werkzeug
Fixation device for a support and action device and a tool

(30) Priorité: 19.04.1993 FR 9304794
(43) Date de publication de la demande: 26.10.1994
(73) Titulaire: DURAND INTERNATIONAL (société anonyme), 07210 Baix (FR)
(72) Inventeur: Durand, Lucien, F-07000 LYAS (FR)
(74) Mandataire: Derambure, Christian

(56) Documents cités:
- DE-A- 3 632 805

## Description

La présente invention est relative au domaine technique de la liaison temporaire entre un outil et un organe de support et d'actionnement constitué par exemple par un bras animé d'un mouvement approprié par un organe moteur pour rendre l'outil actif.

Le domaine technique concerné est, plus particulièrement, bien que ceci ne soit limitatif, le domaine des outils devant être animés pour leur fonction d'un déplacement alternatif.

A titre d'application préférée non limitative, il convient de citer les outils du type couteau, feuille, lame ou analogue qui sont utilisés, par exemple, pour assurer le fendage des carcasses d'animaux de boucherie.

Les outils du type ci-dessus doivent être périodiquement démontés, afin de contrôler leur intégrité ou de réaménager, par un usinage, affûtage ou analogue, la ou les parties actives qu'ils comportent et qui subissent, soit des usures, soit des détériorations par leur mise en service.

A cette fin, il est généralement préconisé de faire intervenir un mode d'assemblage par tenon et mortaise, le tenon étant formé par la queue de l'outil et la mortaise étant présentée par l'organe de support et d'actionnement. L'assemblage est complété par un système de fixation amovible qui peut être un lardon ou une réglette du type à coincement par surface conique.

De tels moyens ne donnent pas satisfaction, car ils n'apportent pas de sécurité positive dans l'assemblage qu'ils assurent.

Il est fréquent, en effet, de constater que les cycles de fonctionnement et les vibrations produisent des desserrements ou des décoincements qui ont pour effet de libérer, au moins partiellement, la queue par rapport à la mortaise. Un jeu plus ou moins important s'établit avec pour conséquence, soit une détérioration des parties complémentaires, soit éventuellement une libération totale conduisant à la projection intempestive de l'outil avec les risques d'accident qui s'y attachent.

En tant que moyen de liaison entre un organe d'actionnement et un outil, il convient de citer aussi l'enseignement de la demande DE-B-36 32 805 qui concerne un montage pour outils parallèles faisant intervenir un moyen traversant à la fois l'organe et l'outil.

Si un tel enseignement peut trouver un intérêt dans le cas de liaison unitaire d'une pluralité d'outils à disposition parallèle, il convient de noter qu'il apparaît peu approprié à la liaison d'un seul outil sur un organe d'actionnement.

Par ailleurs, le montage et le démontage d'une telle liaison n'est pas simple, rapide et pratique et, de surcroît, n'est pas à même de réaliser un blocage avec effet de coincement capable de supporter, sans desserrement, des contraintes alternées, comme cela est le cas du mode fonctionnel d'un outil du type couteau à déplacement alternatif.

L'objet de l'invention est justement de remédier aux inconvénients ci-dessus en proposant un nouveau dispositif de fixation amovible permettant de lier fonctionnellement un outil et un organe de support et d'actionnement, en établissant un assemblage positif particulièrement ferme et résistant pouvant être considéré comme insensible aux vibrations, voire au mode fonctionnel de l'outil.

Un autre objet de l'invention est de proposer un dispositif de fixation amovible qui soit simple et rapide de mise en place et d'enlèvement, de manière à permettre une liaison positive et une désolidarisation aisée pour favoriser et faciliter les opérations d'assemblage ou de montage et de désassemblage de l'outil par rapport à l'organe de support et d'actionnement.

Pour atteindre les objectifs ci-dessus, le dispositif selon l'invention est caractérisé en ce que :
- la queue comporte localement, d'une part, deux bords longitudinaux définissant le tenon et convergents selon un angle α et, d'autre part, une ouverture située entre lesdits bords,
- l'organe de support comporte une mortaise, définie par deux bords longitudinaux, complémentaire à ceux du tenon et présente, entre sesdits bords, un logement traversant s'ouvrant dans la mortaise pour être situé sensiblement en coïncidence avec l'ouverture dans l'état d'engagement du tenon dans la mortaise,
- le système de fixation amovible comprend un bloc placé en relation avec le logement et portant un verrou mobile disposé dans ledit logement, pourvu d'une tête de blocage et associé à des moyens de commande manuelle en position d'effacement de la tête par rapport à la mortaise et d'actionnement en position de verrouillage, dans laquelle la tête est engagée dans l'ouverture de tenon et agit sur le bord de cette dernière pour solliciter ledit tenon en déplacement relatif dans la mortaise, selon la direction de convergence des bords.

Diverses autres caractéristiques ressortent de la description faite ci-dessous en référence aux dessins annexés qui montrent, à titre d'exemples non limitatifs, des formes de réalisation et de mise en oeuvre de l'objet de l'invention.

La **Fig. 1** est une élévation schématique illustrant un exemple d'application dans lequel le dispositif de fixation amovible selon l'invention est mis en oeuvre.

La **Fig. 2** est une coupe-élévation partielle prise, à plus grande échelle, sensiblement selon la ligne II-II de la **Fig. 1**.

La **Fig. 3** est une élévation partielle prise selon la ligne III-III de la **Fig. 2**.

La **Fig. 4** est une coupe transversale partielle prise selon la ligne IV-IV de la **Fig. 3**.

La **Fig. 5** est une coupe prise selon la ligne V-V de la **Fig. 2**.

La **Fig. 6** est une coupe-élévation partielle analogue à la **Fig. 2**, mais illustrant une variante de réalisation.

La **Fig. 7** est une vue en plan prise selon la ligne VII-VII de la **Fig. 6.**

La **Fig. 8** est une coupe transversale prise selon la ligne VIII-VIII de la **Fig. 6.**

Les **Fig. 9** et **10** sont des élévations, partie en coupe partielle, illustrant deux autres variantes de réalisation.

La **Fig. 11** est une coupe-élévation d'une autre variante de réalisation.

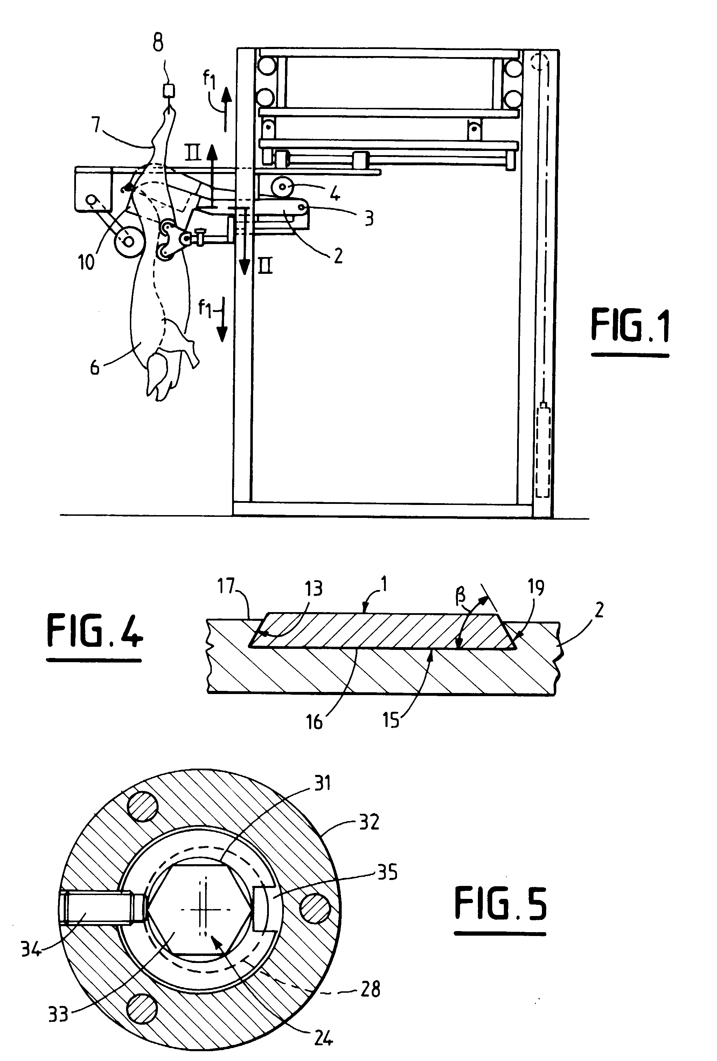

La **Fig. 1** montre de façon schématique un exemple d'application du dispositif de l'invention destiné à lier, de façon temporaire, un outil **1** et un organe **2** de support et d'actionnement susceptible d'être animé d'un déplacement alternatif dans le double sens de la flèche **f**_{**1**} en étant, par exemple, monté sur un pivot **3** et lié à un organe moteur **4**, tel qu'un excentrique ou analogue.

Dans l'exemple d'application, l'organe **2** est constitué par un bras et l'outil **1** par un couteau ou une feuille ou une lame destiné à assurer la fente d'une carcasse **6** d'un animal de boucherie suspendu, comme cela est connu dans la technique, par les pattes arrière **7** à une voie de circulation **8**.

Il est clair que l'exemple ci-dessus n'est donné qu'à titre illustratif, car le dispositif de fixation amovible selon l'invention a vocation à être mis en oeuvre chaque fois qu'il convient d'assurer la fixation amovible temporaire d'un outil par rapport à un organe de support.

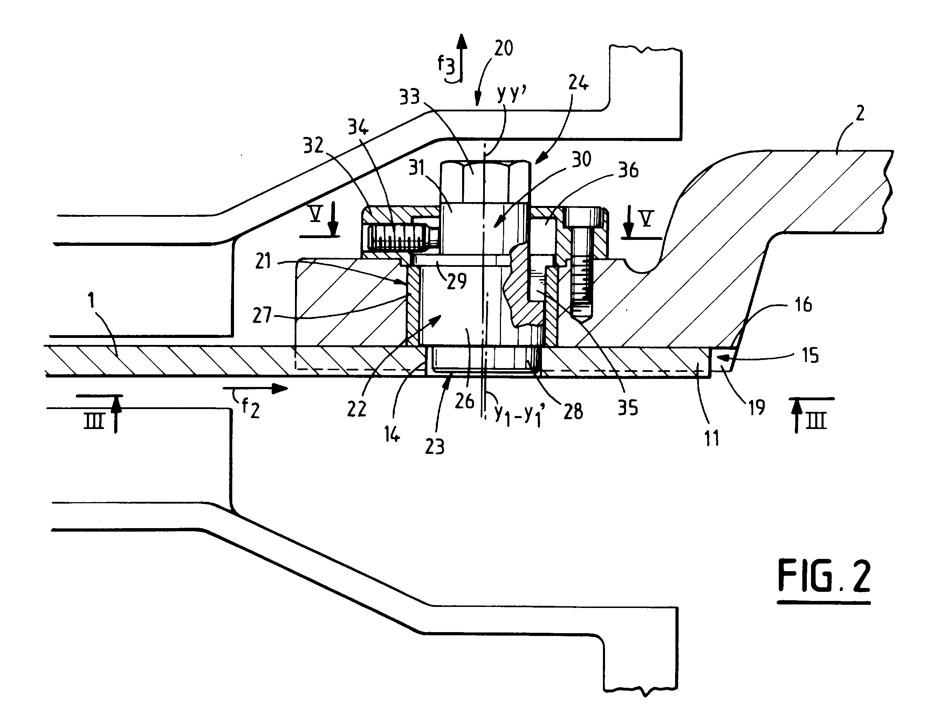

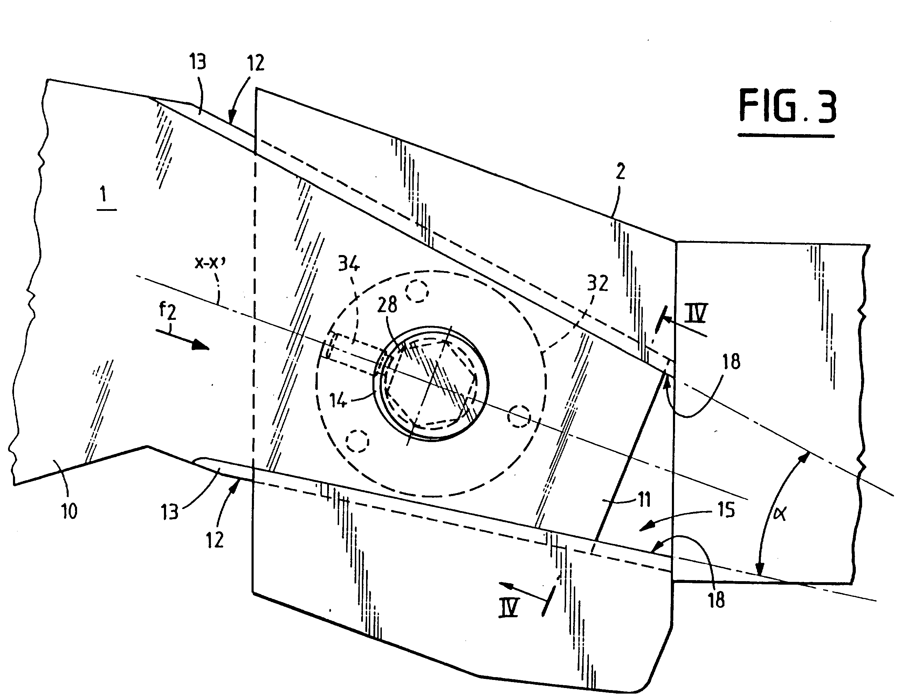

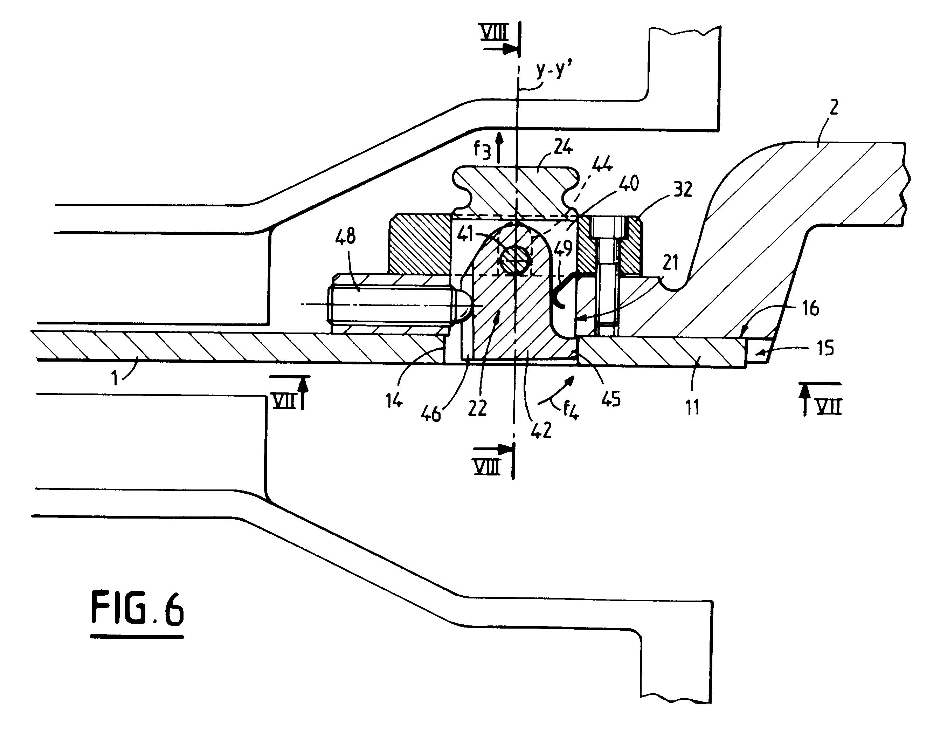

Selon un premier exemple de réalisation, illustré par les **Fig. 2** et **3**, le dispositif fait intervenir, sur l'outil **1** et à l'opposé de sa partie active **10**, une queue **11** qui présente la caractéristique d'être réalisée sous la forme d'un tenon comportant au moins localement, deux bords **12** qui sont convergents en direction opposée de la partie **10**, selon un angle α pouvant être compris entre 18 et 22°. De préférence, l'angle α est égal à 20°. Selon une autre caractéristique, la queue ou tenon **11** est aussi réalisé pour présenter, comme cela est illustré par la **Fig. 4**, une section droite transversale en queue d'aronde conférant aux bords longitudinaux convergents **12** des faces **13** qui sont inclinées de façon convergente chacune selon un angle β compris entre 45 et 70°. L'angle β est, de préférence, fixé à 60°. Selon une troisième caractéristique constructive du tenon **11**, une ouverture **14** est pratiquée dans la partie sensiblement médiane en étant, par exemple, de forme circulaire centrée sur l'axe **x-x'** longitudinal du tenon **11**.

Il doit être considéré que l'angle α peut être défini, comme illustré, par deux bords **12** qui sont inclinés d'une même valeur par rapport à l'axe **x-x'**, ou par des bords **12** inclinés selon des valeurs différentes. Il pourrait même être envisagé que l'un des bords soit parallèle à l'axe **x-x'**.

Le dispositif de l'invention fait intervenir sur le bras ou organe de support et d'actionnement **2** une mortaise **15** ouverte, dont la profondeur entre le fond **16** et le dessus ouvert **17** est compatible avec la réception de l'épaisseur du tenon **11**. La mortaise **15** est exactement complémentaire au tenon **11** et comporte, en conséquence, deux bords **18** convergents également selon l'angle α et définis par des faces **19** affectant, en section-droite transversale, une forme en queue d'aronde définie par l'angle β pour chacun desdits bords.

De cette manière, il est possible en engageant la queue **11** dans la mortaise **15**, dans le sens de la flèche **f**_{**2**}, d'obtenir un coincement axial et un coincement transversal par la coopération des faces **13** et **19** définissant, respectivement, les bords **12** et **18**.

Le dispositif de l'invention fait, par ailleurs, intervenir, pour l'assemblage et le désassemblage de la queue **11** dans la mortaise **15**, un système de fixation amovible **20** adaptable dans un logement **21** présenté par l'organe **2**, de manière à pouvoir être placé en coïncidence au moins partielle avec l'ouverture **14**, lorsque la queue ou le tenon **11** est en état d'engagement dans la mortaise. Le système de fixation amovible **20** comprend un verrou **22** mobile dans le logement **21** et possédant une tête de blocage **23** apte à coopérer avec l'ouverture **14**. Le verrou, dans son ensemble, est associé à des moyens **24** assumant des fonctions de commande manuelle en position d'effacement de la tête **23** par rapport à la mortaise **15** et d'actionnement en position de verrouillage, dans laquelle la tête **23** est engagée dans l'ouverture **14** pour agir sur le bord de cette dernière, afin de solliciter le tenon **11** dans le sens de la flèche **f**_{**2**} en déplacement relatif dans la mortaise **15**.

Dans l'exemple de réalisation selon les **Fig. 2** à **5**, le système **20** est du type tournant sur un axe **y-y'** qui est perpendiculaire au plan du fond **16** de la mortaise **15**. Le système tournant comprend un corps cylindrique **26** qui est monté tournant dans le logement **21**, soit directement, soit avec interposition d'une fourrure, d'une bague ou d'un coussinet **27**. Le corps **26** est prolongé à une extrémité par la tête **23** qui est constituée par une portée cylindrique **28** d'axe **y-y'** excentré par rapport à l'axe **y-y'**. A l'opposé de la portée excentrée **28**, le corps **26** est prolongé, notamment au-delà d'un épaulement ou d'une collerette **29**, par une noix **30** constituant les moyens **24** et comprenant une portée cylindrique **31** coaxiale au corps **26** et guidée à travers un bloc **32** adaptable sur l'organe **2** et, plus particulièrement, sur la face de ce dernier opposée à celle présentant la mortaise **15**. Le bloc **32** peut être adapté de toute manière appropriée en étant centré coaxialement au logement **21**.

La noix **30** est prolongée extérieurement au bloc **32** par un moyen **33** apte à assumer une fonction d'entraînement du corps **26** en rotation. Le moyen **33** peut, à cet effet, être avantageusement constitué par un prolongement polygonal, éventuellement complété par une tête assumant une fonction de commande manuelle.

Le bloc **32** porte un moyen de blocage **34** constitué par une vis s'étendant au-dessus de l'épaulement **29** pour lequel elle constitue une butée axiale. La vis **34** est destinée à coopérer avec la portée **31** pour immobiliser angulairement le verrou dans une position dans laquelle la tête **23** fait saillie hors du fond de la mortaise **15** et coopère avec l'ouverture **14**. Le corps **26** comporte, dans sa partie périphérique correspondant à la partie excentrée de la portée **28**, une saignée **35** dont la largeur est légèrement supérieure au diamètre de la vis **34**.

La mise en service du dispositif s'effectue de la façon suivante.

A supposer qu'il convienne d'assurer l'adaptation du tenon **11** dans la mortaise **15**, le système de fixation amovible est commandé en rotation par l'intermédiaire du prolongement **33** pour amener la saignée **35** en alignement radial avec la vis **34**. De cette manière, il est possible de commander le retrait ou l'effacement dans le sens de la flèche **f**_{**3**} du corps **26** et, par conséquent, de la tête de blocage **23** par rapport au fond **16** de la mortaise **15** dont la section de passage est ainsi entièrement libérée. La plage d'effacement ou de retrait axial du corps **26** est conférée par coopération entre l'épaulement **29** et le dessus du bloc **32** qui délimite, à cet effet, un chambrage **36**.

Le tenon **11** peut, ensuite, être engagé dans le sens de la flèche **f**_{**2**} pour amener la coopération des faces **13** et **19** dans une position dans laquelle l'ouverture **14** est sensiblement placée en coïncidence avec le logement **21**.

Dans cette position, le corps **26** est déplacé dans le sens inverse de la flèche **f**_{**3**}, puis ensuite soumis à rotation par le prolongement **33** pour faire agir la partie excentrée de la portée **28** contre le bord de l'ouverture **14** et affirmer l'engagement dans le sens de flèche **f**_{**2**} du tenon **11** dans la mortaise **15** dans laquelle le tenon est soumis à coincement axial et transversal avec application contre le fond **16** en raison des sections droites transversales en queue d'aronde.

Le coincement ainsi obtenu dans les deux plans est affermi par la rotation du corps **26** jusqu'à refus par exemple, après quoi la vis **34** est serrée contre la portée **31** pour immobiliser angulairement le verrou **22**.

Dans cet état, une liaison ferme, résistance et durable est établie entre l'organe **2** et l'outil **1** sans risque de désolidarisation intempestive.

Lorsqu'il convient de dégager l'outil **1**, le système **20** est actionné selon une procédure inverse à ce qui vient d'être décrit par desserrement de la vis **34** permettant de commander la rotation inverse du corps **26** pour dégager et éloigner la portée excentrée **28** par rapport au bord de l'ouverture **14**. Il suffit, ensuite, après avoir commandé l'effacement du verrou **22** en agissant à partir des moyens **24**, de provoquer le décoincement du tenon **11** pour le dégager de la mortaise dans le sens inverse de la flèche **f**_{**2**}.

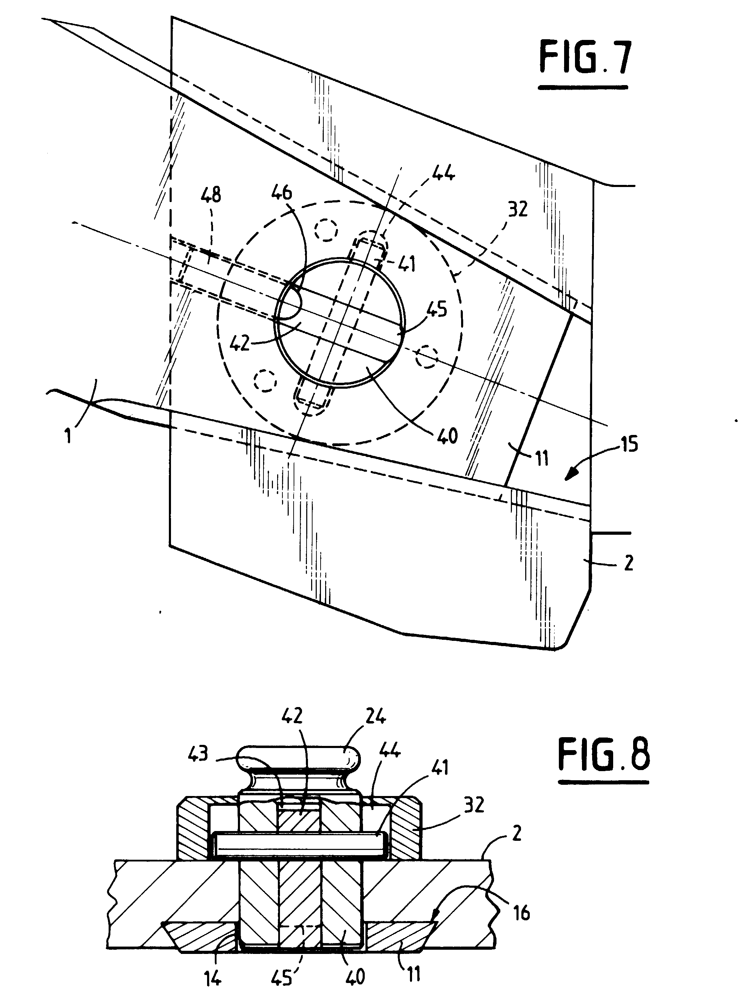

Les **Fig. 6** à **8** montrent une variante de réalisation dans laquelle le bloc **32** supporte un corps de verrou **40** occupant le logement **21** dans lequel il peut coulisser selon l'axe **y-y'**. Le corps **40** forme, extérieurement au bloc **32**, le moyen **24**, tel qu'un bouton, constituant un organe de commande manuelle en effacement dans le sens de la flèche **f**_{**3**}.

Le corps **40** supporte, par l'intermédiaire d'un axe **41**, une tête pivotante de blocage **42** qui est disposée pour pivoter librement à l'intérieur d'un évidement **43** ménagé dans le corps **40** pour lui conférer une forme de chape. L'axe **41** est pourvu de parties terminales qui s'étendent à l'intérieur de dégagements oblongs **44** ménagés dans le bloc **32**, selon une direction qui est perpendiculaire au plan du fond **16** de la mortaise **15**. L'axe **41** s'étend sensiblement parallèlement au plan du fond **16**.

La tête de blocage **42**, destinée à faire saillie à l'intérieur de la mortaise **15** dans la position de verrouillage ou de blocage, comporte un nez de blocage **45** destiné à coopérer avec le bord de l'ouverture **14**. La tête **42** comporte, également, à l'opposé du nez **45**, une rainure **46** apte à recevoir un poussoir à vis **48** constituant un moyen d'actionnement en position de verrouillage de la tête **42**. La vis **48** est, à cette fin, montée dans l'organe **2** qui supporte, par ailleurs, par exemple en association avec le bloc **32**, un organe **49** de rappel élastique agissant sur la tête **42**.

Dans la position illustrée aux **Fig. 6** à **8**, le tenon **11** est engagé dans la mortaise **15** et le corps **40** est enfoncé dans le bloc **32**, de manière que la tête **42** soit engagée dans l'ouverture **14**.

Le serrage du poussoir à vis **48** fait basculer ou pivoter la tête **42** dans le sens de la flèche **f**_{**4**}, de sorte que le nez de blocage **45** vient prendre appui contre le bord de l'ouverture **14** et affermir le coincement double réalisé par les formes conjuguées de la queue **11** et de la mortaise **15**, telles que décrites précédemment.

Lorsqu'il convient de libérer l'outil **1**, le poussoir à vis **48** est desserré de manière à provoquer le basculement en retour de la tête **42** par l'action de l'organe élastique **49**.

Il devient, ensuite, possible d'agir sur l'organe ou bouton **24** pour extraire partiellement dans le sens de la flèche **f**_{**3**}, la tête **42** par rapport à l'ouverture **14** en escamotant cette tête à l'intérieur du logement **21**. L'amplitude de coulissement axial du corps **40** est par exemple limitée par la coopération entre le nez **45** et le ressort **49** ou encore, plus précisément, par la hauteur des dégagements uniformes **44**.

Le tenon **11** peut alors être dégagé de la mortaise **15**.

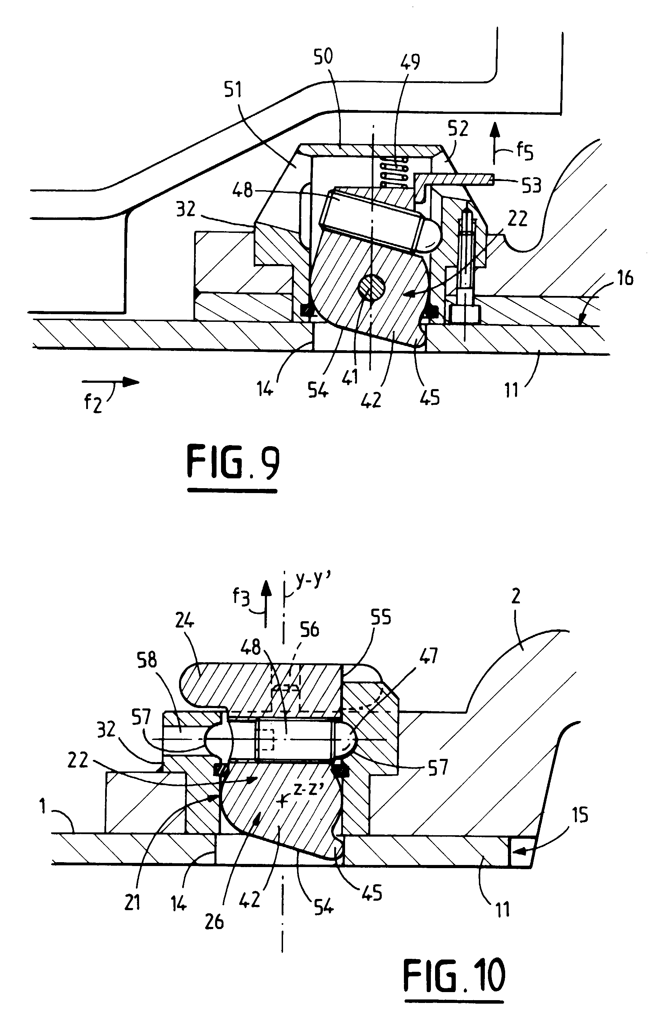

La **Fig. 9** montre une autre variante de réalisation dans laquelle le bloc **32** constitue par lui-même le corps de support de la tête pivotante **42** pourvue, également, du nez de blocage **45**. Dans cette variante de réalisation, le poussoir à vis **48** est porté par le tête pivotante pour coopérer directement avec le bloc **32**. L'organe élastique **49** est alors interposé entre la tête pivotante **42** et le dessus **50** du bloc **32** qui présente une première lumière **51** d'accès à la vis **48** et une seconde lumière **52** à travers laquelle fait saillie un moyen **53** solidaire de la tête **42** et apte à constituer un organe de commande en effacement contre l'action du ressort **49**.

La forme de la tête **42** est choisie pour qu'en résultat d'une action manuelle sur l'organe **53**, dans le sens de la flèche **f**_{**5**}, le nez de blocage **45** puisse être complètement effacé par pivotement de la tête **42** par rapport au fond **16** de la mortaise **15**, lorsqu'il convient de faciliter l'engagement du tenon **11**. Il peut aussi être envisagé de conférer à la tête **42** et dans le prolongement du nez **45** une rampe inclinée **54** permettant d'obtenir automatiquement l'effacement du nez **45**, lors de l'engagement du tenon **11** dans le sens de la flèche **f**_{**2**}.

La **Fig. 10** montre une autre variante de réalisation dans laquelle le corps de verrou **26** constitue par lui-même la tête **42** pourvue du nez de blocage **45** et forme, extérieurement au bloc **32**, le moyen **24**, tel qu'un bouton apte à commander l'effacement dans le sens de la flèche **f**_{**3**} par coulissement axial sur l'axe **y-y'** dans le logement **21**, comme dit précédemment. Dans cette forme de réalisation, le corps **26** est, par exemple, de forme partiellement barriquée dans la partie formant la tête **42**, de manière à pouvoir connaître aussi un basculement relatif autour d'un axe virtuel **z-z'**. L'immobilisation en rotation du corps **26** peut être assurée par l'intermédiaire d'un méplat **55** ou encore d'une goupille ou d'un pion **56**. Dans cette forme de réalisation, le poussoir à vis **48** est porté par le corps **26** pour coopèrer avec une gorge annulaire **57** présentée par la face périphérique intérieure du corps **32** qui comporte un trou **58** d'accès au poussoir **48**. La tête **42** peut aussi comporter, comme dans l'exemple précédent, la rampe **54**.

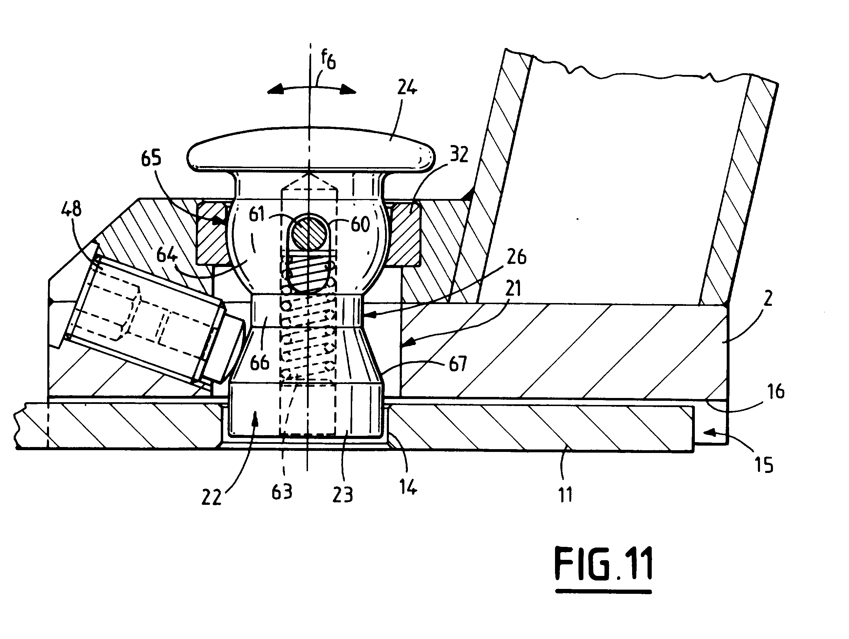

La **Fig. 11** montre une forme de réalisation préférée dans laquelle le verrou mobile **22** est du type coulissant sur l'axe **y-y'** et comprend une tête de blocage **23** et des moyens **24**. Le verrou **22** possède un corps **26** sensiblement en forme de diabolo dont l'une des extrémités constitue la tête **23** et dont l'autre extrémité comprend le moyen **24** situé extérieurement au bloc **32**. Le corps **26** est monté par une lumière transversale **60** sur un axe **61** porté par le bloc **32**. Un ressort **62** est monté dans un alésage borgne **63** du corps **26** pour prendre appui sous l'axe **61** et solliciter toujours la tête **23** en saillie dans la mortaise **15**. Le corps **26** forme, sous le moyen **24** et sensiblement dans le plan de l'axe **61**, une partie **64** barriquée, analogue à une portée sphérique coopérant avec un siège **65** présenté par le bloc **32**. Ainsi, le corps **26** peut pivoter perpendiculairement à l'axe **61** dans le double sens de la flèche **f**_{**6**}. La portée **64** aboutit à une striction **66** qui est raccordée à la tête **23** par une partie tronconique **67** sur laquelle agit le poussoir à vis **48** dont la fonction est identique à celle précédemment expliquée.

L'angle α, défini entre les bords longitudinaux, pourrait être dirigé dans le sens opposé, c'est-à-dire vers l'outil proprement dit à condition de prévoir entre le tenon **11** et le corps d'outil une partie intermédiaire de largeur constante permettant un montage et un démontage par rapport à la mortaise **15**.

## Revendications

1. Dispositif de fixation amovible entre un organe de support et d'actionnement **(2)** et un outil **(1)**, du type faisant intervenir, sur l'outil, une queue localement en forme de tenon **(11)** à section droite transversale en queue d'aronde, sur l'organe, une mortaise complémentaire **(15)** apte à recevoir la queue par coulissement axial et, entre les deux, un système de fixation amovible **(20),** traversant à la fois l'organe et la queue,
caractérisé en ce que :
- la queue comporte localement, d'une part, deux bords longitudinaux **(12)** définissant le tenon **(11)** et convergents selon un angle (α) et, d'autre part, une ouverture **(14)** située entre lesdits bords,
- l'organe de support comporte une mortaise **(15)** définie par deux bords longitudinaux **(18)** complémentaire à ceux du tenon et présente, entre sesdits bords, un logement traversant **(21)** s'ouvrant dans la mortaise pour être situé sensiblement en coïncidence avec l'ouverture dans l'état d'engagement du tenon dans la mortaise,
- le système de fixation amovible **(20)** comprend un bloc **(32)** placé en relation avec le logement et portant un verrou mobile **(22)** disposé dans ledit logement, pourvu d'une tête de blocage **(23, 42)** et associé à des moyens **(24, 48, 53, 55)** de commande manuelle en position d'effacement de la tête par rapport à la mortaise et d'actionnement en position de verrouillage dans laquelle la tête est engagée dans l'ouverture de tenon et agit sur le bord de cette dernière pour solliciter ledit tenon en déplacement relatif dans la mortaise, selon la direction de convergence des bords.

2. Dispositif selon la revendication 1, caractérisé en ce que l'angle (α) est compris entre 18 et 22°.

3. Dispositif selon la revendication 1 ou 2, caractérisé en ce que le tenon **(11)** possède un section droite transversale en queue d'aronde comprenant des bords **(13)** inclinés selon un angle (β) compris entre 45 et 70°.

4. Dispositif selon la revendication 1, caractérisé en ce que la mortaise **(15)** de l'organe de support est ouverte.

5. Dispositif selon la revendication 1, caractérisé en ce que le verrou **(22)** du système de fixation amovible **(20)** est tournant sur un axe **(y-y')** perpendiculaire au plan du fond **(16)** de la mortaise et en ce que la tête de blocage **(23)** dudit verrou est constituée par une portée **(28)** excentrée par rapport à l'axe du verrou.

6. Dispositif selon la revendication 5, caractérisé en ce que le verrou **(22)** est constitué par un corps cylindrique (26) tournant dans le logement **(21),** immobilisé axialement et prolongé à une extrémité par la portée excentrée **(28)** et, à l'autre, par une noix **(30)** assumant les fonctions de moyens de commande manuelle et de moyens d'actionnement.

7. Dispositif selon la revendication 6, caractérisé en ce que la noix **(30)** comprend, à l'opposé de la portée excentrée **(28),** d'une part, une portée cylindrique **(36)** coaxiale au corps, traversant le corps pour coopérer avec un moyen **(34)** de blocage en rotation et, d'autre part, dans l'axe de ladite portée, un prolongement **(33)** saillant hors du corps et apte à entraîner le corps en rotation dans le logement.

8. Dispositif selon la revendication 7, caractérisé en ce que le corps **(26)** du verrou présente, dans sa partie de raccordement avec la noix **(30)**, un épaulement **(29)** situé sous le moyen de blocage **(34)** qui est constitué par une vis radiale montée dans le bloc pour assumer supplémentairement une fonction de butée axiale et en ce que le corps cylindrique **(26)** présente, dans sa paroi périphérique et en alignement avec la partie excentrée de la portée, une saignée axiale **(35)** de largeur correspondant au diamètre de la vis.

9. Dispositif selon la revendication 1, caractérisé en ce que le verrou du système de fixation amovible **(20)** comprend un corps **(26)** portant une tête **(23, 42)** pivotant sensiblement sur un axe **(41, 61)** parallèle au plan du fond **(16)** de la mortaise **(15)** et un moyen d'actionnement de la tête constitué par un poussoir à vis **(48).**

10. Dispositif selon la revendication 9, caractérisé en ce que le corps **(26)** est porté par un axe **(41, 61)** avec présence de lumières ou dégagements oblongs **(44, 60)** conférant une liberté de déplacement axial limité en effacement de la tête par rapport à l'ouverture **(14)** selon une direction perpendiculaire au plan du fond de la mortaise **(15)** et en ce que ladite tête comporte une partie de blocage **(45)** apte à coopérer avec le bord de l'ouverture sous l'action du poussoir à vis.

11. Dispositif selon la revendication 9, caractérisé en ce que le corps fait partie intégrante du bloc et contient la tête pivotante **(42)** qui forme, d'une part, la partie de blocage **(45)** et, d'autre part, un moyen de commande manuelle **(53)** traversant le bloc.

12. Dispositif selon la revendication 9, caractérisé en ce que le corps forme par lui-même la tête de blocage.

13. Dispositif selon la revendication 9, caractérisé en ce que le poussoir à vis **(48)** est interposé entre le bloc **(32)** ou l'organe de support (2) et la tête pivotante **(42).**

14. Dispositif selon la revendication 9, caractérisé en ce que le moyen de commande manuelle est constitué par un bouton formé par le corps extérieurement au bloc.

15. Dispositif selon la revendication 9, caractérisé en ce qu'un organe élastique de rappel **(49, 63),** en position d'effacement de la tête, est interposé entre cette dernière et le corps ou bloc.

## Patentansprüche

1. Abnehmbare Befestigungsvorrichtung zwischen einem Träger- und Betätigungsorgan (2) und einem Werkzeug (1), eines Typs, der am Werkzeug ein örtlich zapfenförmiges Endstück (11) mit geradem, schwalbenschwanzförmigem Querschnitt und am Organ ein entsprechendes Zapfenloch (15) zur Aufnahme des Endstücks durch axiales Verschieben verwendet, und zwischen den beiden, ein abnehmbares Befestigungssystem (20), das gleichzeitig das Organ und das Endstück durchquert, dadurch gekennzeichnet, dass:
- das Endstück örtlich einerseits zwei Längskanten (12) aufweist, die den Zapfen (11) bilden und nach einem Winkel (α) konvergieren, und andererseits eine zwischen den beiden besagten Kanten liegende Öffnung (14),
- das Trägerorgan ein Zapfenloch (15) aufweist, das von zwei diejenigen des Zapfens ergänzenden Längskanten (18) definiert wird, und zwischen den besagten Kanten eine durchgehende, sich im Zapfenloch öffnende Aufnahme (21), um etwa mit der Öffnung im eingeführten Zustand des Zapfens im Zapfenloch übereinzustimmen,
- das abnehmbare Befestigungssystem (20) einen in Bezug auf die Aufnahme angeordneten Block (32) mit einem mobilen, in der besagten Aufnahme angeordneten Riegel (22) umfasst, ausgestattet mit einem Sperrkopf (23, 42) und verbunden mit manuellen Steuermitteln (24, 48, 53, 55) in der Rückzugsstellung des Kopfs in Bezug auf das Zapfenloch, und mit Betätigungsmitteln in der Verriegelungsstellung, in der der Kopf in die Öffnung des Zapfens eingeführt ist und auf ihre Kante wirkt, um den besagten Zapfen im Zapfenloch nach einer Konvergenzrichtung der Kanten relativ zu versetzen.

2. Vorrichtung nach Anspruch 1, dadurch gekennzeichnet, dass der Winkel (α) zwischen 18 und 22° beträgt.

3. Vorrichtung nach Anspruch 1 oder 2, dadurch gekennzeichnet, dass der Zapfen (11) einen geraden, schwalbenschwanzförmigen Querschnitt mit nach einem Winkel (β) zwischen 45 und 70° geneigten Kanten (13) aufweist.

4. Vorrichtung nach Anspruch 1, dadurch gekennzeichnet, dass das Zapfenloch (15) des Trägerorgans geöffnet ist.

5. Vorrichtung nach Anspruch 1, dadurch gekennzeichnet, dass der Riegel (22) des abnehmbaren Befestigungssystems (20) um eine lotrecht zur Bodenebene (16) des Zapfenlochs verlaufende Achse (y-y') drehbar ist, und dass der Sperrkopf (23) des besagten Riegels aus einer in Bezug auf die Riegelachse exzentrierten Fläche (28) besteht.

6. Vorrichtung nach Anspruch 5, dadurch gekennzeichnet, dass der Riegel (22) aus einem in der Aufnahme (21) drehenden zylindrischen Körper (26) besteht, der axial immobilisiert ist und an einem Ende von der exzentrierten Fläche (28) und am anderen von einem Anlauf (30) verlängert wird, der die Funktionen der manuellen Steuermittel und der Betätigungsmittel gewährleistet.

7. Vorrichtung nach Anspruch 6, dadurch gekennzeichnet, dass der Anlauf (30) gegenüber der exzentrierten Fläche (28) einerseits eine zylindrische, zum Körper koaxial verlaufende Fläche (36) aufweist, die den Körper durchquert, um mit einem sich drehenden Sperrmittel (34) zusammenzuwirken, und andererseits, in der Achse der besagten Fläche, eine aus dem Körper herausragende Verlängerung (33), die den Körper in der Aufnahme drehen kann.

8. Vorrichtung nach Anspruch 7, dadurch gekennzeichnet, dass der Körper (26) des Riegels an seinem Anschlussteil mit dem Anlauf (30) ein unter dem Sperrmittel (34) angeordnetes Schulterstück (29) aufweist, das aus einer radialen, im Block montierten Schraube besteht, um ebenfalls eine axiale Anschlagfunktion zu erfüllen, und dass der zylindrische Körper (26) in seiner umgebenden Wand und ausgerichtet mit dem exzentrierten Teil der Fläche einen axialen Einschnitt (35) aufweist, dessen Breite dem Durchmesser der Schraube entspricht.

9. Vorrichtung nach Anspruch 1, dadurch gekennzeichnet, dass der Riegel des abnehmbaren Befestigungssystems (20) einen Körper (26) mit einem Kopf (23, 42) umfasst, der sich etwa um eine Achse (41, 61) parallel zur Bodenebene (16) des Zapfenlochs (15) dreht, sowie ein aus einem Schraubenstössel (48) bestehendes Betätigungsmittel des Kopfs.

10. Vorrichtung nach Anspruch 9, dadurch gekennzeichnet, dass der Körper (26) von einer Achse (41, 61) mit Langlöchern (44, 60) getragen wird, die eine begrenzte axiale Bewegungsfreiheit mit Rückzug des Kopfs in Bezug auf die Öffnung (14) nach einer lotrecht zur Bodenebene des Zapfenlochs (15) verlaufenden Richtung bietet, und dass der besagte Kopf einen Sperrteil (45) umfasst, das mit dem Rand der Öffnung unter Wirkung des Schraubenstössels zusammenwirken kann.

11. Vorrichtung nach Anspruch 9, dadurch gekennzeichnet, dass der Körper fester Bestandteil des Blocks ist und den Drehkopf (42) enthält, der einerseits das Sperrteil (45) und andererseits ein manuelles, den Block durchquerendes Steuermittel (53) bildet.

12. Vorrichtung nach Anspruch 9, dadurch gekennzeichnet, dass der Körper selbst den Sperrkopf bildet.

13. Vorrichtung nach Anspruch 9, dadurch gekennzeichnet, dass der Schraubenstössel (48) zwischen dem Block (32) oder dem Trägerorgan (2) und dem Drehkopf (42) gelagert ist.

14. Vorrichtung nach Anspruch 9, dadurch gekennzeichnet, dass das manuelle Steuermittel ausserhalb des Blocks aus einem vom Körper gebildeten Knopf besteht.

15. Vorrichtung nach Anspruch 9, dadurch gekennzeichnet, dass zwischen dem Kopf und dem Körper bzw. Block in Rückzugstellung des Kopfs ein elastisches Rückzugsorgan (49, 63) angeordnet ist.

## Claims

1. A removable fastening device for fastening a supporting and actuating element (2) and a tool (1), of the type involving, on the tool, a tang locally shaped like a tenon (11) with a dovetail-shaped cross section and, on the element, a complementary notch (15) capable of receiving the tang through axial sliding and, between them, a removable fastening system (20) passing through both the element and the tang,
characterised in that :
- the tang locally comprises, on the one hand, two longitudinal edges (12) defining the tenon (11) and converging at an angle (a) and, on the other hand, an opening (14) located between said edges,
- the supporting element comprises a notch (15) defined by two longitudinal edges (18) complementing those of the tenon and has, between said edges, a through housing (21) opening into the notch so as to substantially coincide with the opening when the tenon is engaged in the notch,
- the removable fastening system (20) comprises a block (32) placed in communication with the housing and carrying a mobile latch (22) arranged inside said housing, provided with a locking head (23, 42) and associated with means (24, 48, 53, 55) to manually drive the head towards a removed position with respect to the notch and to actuate the head towards a locking position in which the head is engaged in the opening of the tenon and acts on the edge of this opening to force said tenon into a relative displacement inside the notch, along the direction of convergence of the edges.

2. A device according to claim 1, characterised in that the angle (a) is comprised between 18 and 22°.

3. A device according to claim 1 or 2, characterised in that the tenon (11) has a dovetail-shaped cross section comprising edges (13) inclined at an angle (b) comprised between 45 and 70°.

4. A device according to claim 1, characterised in that the notch (15) of the supporting element is open.

5. A device according to claim 1, characterised in that the latch (22) of the removable fastening system (20) is revolving about an axis (y-y') perpendicular to the plane of the bottom (16) of the notch and in that the locking head (23) of said latch consists of a bearing surface (28) off-centre with respect to the latch axis.

6. A device according to claim 5, characterised in that the latch (22) consists of a cylindrical body (26) revolving inside the housing (21), axially secured, and prolonged at one end by the off-set bearing surface (28) and, at the other end, by a stop (30) assuming the functions of manual driving means and actuating means.

7. A device according to claim 6, characterised in that the stop (30) comprises, opposite to the off-centre bearing surface (28), on the one hand, a cylindrical bearing surface (36) coaxial with the body, passing through the body to cooperate with a rotational locking means (34) and, on the other hand, along the axis of said bearing surface, a prolongation (33) protruding from the body and capable of driving the body into rotation inside the housing.

8. A device according to claim 7, characterised in that the latch body (26) has, in its part connected to the stop (30), a shouldering (29) located beneath the locking means (34) which consists of a radial screw mounted in the block to assume an additional axial thrust bearing function and in that the cylindrical body (26) has, in its peripheral wall and in alignment with the off-centre part of the bearing surface, an axial groove (35) with a width corresponding to the diameter of the screw.

9. A device according to claim 1, characterised in that the latch of the removable fastening system (20) comprises a body (26) carrying a head (23, 42) substantially pivoted on a pin (41, 61) parallel to the plane of the bottom (16) of the notch (15) and a head actuating means consisting of a screw thrustor (48).

10. A device according to claim 9, characterised in that the body (26) is carried by a pin (41, 61) with the presence of elongated slots or holes (44, 60) conferring a limited axial displacement freedom with the head removed from the opening (14) along a direction perpendicular to the plane of the bottom of the notch (15) and in that said head includes a locking part (45) capable of cooperating with the edge of the opening when acted upon by the screw thrustor.

11. A device according to claim 9, characterised in that the body is an integral part of the block and contains the pivoting head (42) which forms, on the one hand, the locking part (45) and, on the other hand, a manual control means (53) passing through the block.

12. A device according to claim 9, characterised in that the body forms the locking head on its own.

13. A device according to claim 9, characterised in that the screw thrustor (48) is inserted between the block (32) or supporting element (2) and the pivoting head (42).

14. A device according to claim 9, characterised in that the manual control means consists of a button formed by the body on the exterior of the block.

15. A device according to claim 9, characterised in that an elastic return element (49, 63), with the head in the removed position, is inserted between the latter and the body or block.
